# EUROPÄISCHE PATENTSCHRIFT

(11) **EP 4 299 937 B1**
(45) Veröffentlichungstag und Bekanntmachung des Hinweises auf die Patenterteilung: **19.03.2025**
(21) Anmeldenummer: 23181614.1
(22) Anmeldetag: 27.06.2023
(51) Int. Cl.: F16D 3/38, F16D 3/41

(54) **GELENKGABEL FÜR EIN KREUZGELENK, KREUZGELENK, LENKWELLE EINES KRAFTFAHRZEUGS UND LENKSYSTEM FÜR EIN KRAFTFAHRZEUG**
ARTICULATED FORK FOR A UNIVERSAL JOINT, UNIVERSAL JOINT, STEERING SHAFT OF A MOTOR VEHICLE, AND STEERING SYSTEM FOR A MOTOR VEHICLE
FOURCHE ARTICULÉE POUR UN JOINT UNIVERSEL, JOINT UNIVERSEL, ARBRE DE DIRECTION D'UN VÉHICULE AUTOMOBILE ET SYSTÈME DE DIRECTION POUR UN VÉHICULE AUTOMOBILE

(30) Priorität: 29.06.2022 BE 202205521
(43) Veröffentlichungstag der Anmeldung: 03.01.2024
(73) Patentinhaber: thyssenkrupp Presta Aktiengesellschaft, 9492 Eschen (LI); thyssenkrupp AG, 45143 Essen (DE)
(72) Erfinder: Huber, Sebastian, 6811 Göfis (AT); Nessler, Christoph, 6800 Feldkirch (AT)
(74) Vertreter: thyssenkrupp Intellectual Property GmbH

(56) Entgegenhaltungen:
- EP-A1- 1 653 101
- JP-A- 2016 008 640
- US-A- 4 412 827

## Beschreibung

### Stand der Technik

Die Erfindung betrifft eine Gelenkgabel für ein Kreuzgelenk, umfassend zwei Gabelarme, die parallel zueinander ausgerichtet sind und zwei auf derselben Bohrungsachse angeordnete Bohrungen aufweisen, wobei jede Bohrung eine koaxial zur Bohrungsachse umlaufende Innenfläche aufweist, die ausgebildet ist zum Aufnehmen einer Lagerhülse, welche zum Abrollen von Wälzkörpern ausgebildet ist, wobei der Querschnitt der Bohrung zumindest abschnittweise als Bogenvieleck ausgebildet ist. Ein Kreuzgelenk für eine Lenkwelle eines Kraftfahrzeugs, sowie eine Lenkwelle umfassend ein derartiges Gelenkkreuz sind ebenfalls Gegenstand der Erfindung.

In einem Kraftfahrzeug dient die Lenkwelle zur Übertragung des in das Lenkrad eingebrachten Lenkmoments über die Lenkspindel und die Zwischenwelle in das Lenkgetriebe. Zum Ausgleich von Winkelversatz sind im Verlauf der Lenkwelle mindestens ein, üblicherweise zwei Kreuzgelenke eingegliedert, üblicherweise zwischen Lenkspindel und Zwischenwelle sowie zwischen Zwischenwelle und Lenkgetriebe.

Im Grundaufbau weist jedes Kreuzgelenk zwei jeweils an einem Wellenende angebrachte Gelenkgabeln auf, welche jeweils zwei axial in Wellenrichtung erstreckte, einander quer zur Wellenachse gegenüberliegende Gabelarme aufweisen, die ein Joch bilden. Ein Gelenkkreuz weist zwei Paare von entgegengesetzt radial vorstehenden Gelenkzapfen, kurz als Zapfen bezeichnet, auf, die auf rechtwinklig gekreuzten Zapfenachsen angeordnet sind. Die beiden Zapfen eines Paars sind jeweils in einem Arm einer Gelenkgabel in einem Zapfenlager drehbar um ihre Zapfenachse gelagert, die sich quer zur Wellenachse durch die Arme erstreckt. Die Zapfenlager sind als Wälzlager ausgebildet, üblicherweise als Radialwälzlager, wie beispielsweise Nadellager.

Bei der Übertragung einer Drehbewegung zwischen gegeneinander winkelversetzten Wellen über ein gebeugtes Kreuzgelenk ergibt sich abtriebsseitig eine ungleichförmige Drehbewegung, bei der die Drehgeschwindigkeit während einer Umdrehung zweimal beschleunigt und verlangsamt wird. Dadurch wirken auf die Wälzlager der Zapfen in den Gelenkarmen quer zur Zapfenachse stehende, während der Drehung schwankende Querkräfte. Diese Querkräfte wirken parallel zur Kreuzebene zwischen den außen auf den Zapfen umlaufenden Laufbahnen, den Außenflächen, und den in den Bohrungen der Arme angeordneten Innenflächen der Wälzlager. Daraus resultiert eine winkelabhängig schwankende, lokal höhere radiale Pressung zwischen den Laufbahnen und den dazwischen angeordneten Wälzkörpern.

In der DE 10 2014 116 271 A1 ist an den Zapfen jeweils ein als Wälzlager ausgebildetes Zapfenlager vorgesehen. Dieses weist jeweils einen Lageraußenring auf, der als Lagerbuchse oder Lagerhülse ausgebildet ist, die in einer korrespondierenden Bohrung in einem Gabelarm fixiert ist. Die Bohrungsachse der Bohrung ist dabei identisch mit der Zapfenachse. Zur Montage wird die Lagerhülse in die Bohrung eingesetzt, bevorzugt durch axiales Einpressen. Dabei ist wesentlich, dass die Lagerhülse einerseits fest in der Bohrung sitzt, und andererseits beim Einpressen nicht oder zumindest nicht übermäßig deformiert wird, wodurch die Funktion des Wälzlagers und die spielfreie Lagerung beeinträchtigt werden könnte. Entsprechend ist eine eng tolerierte Bohrung erforderlich, wodurch die Fertigung relativ aufwendig ist.

Eine gattungsgemäße Gelenkgabel ist beispielsweise in der EP 1 653 101 A1 oder der US 4 412 827 A beschrieben.

Angesichts der vorangehend erläuterten Problematik ist es eine Aufgabe der vorliegenden Erfindung, eine verbesserte Lagerung und einen reduzierten Fertigungsaufwand zu ermöglichen.

### Darstellung der Erfindung

Diese Aufgabe wird erfindungsgemäß gelöst durch die Gelenkgabel mit den Merkmalen des Anspruchs 1, das Kreuzgelenk gemäß Anspruch 12 und die Lenkwelle gemäß Anspruch 15. Vorteilhafte Weiterbildungen ergeben sich aus den Unteransprüchen.

Bei einer Gelenkgabel für ein Kreuzgelenk, umfassend zwei Gabelarme, die parallel zueinander ausgerichtet sind und zwei auf derselben Bohrungsachse angeordnete Bohrungen aufweisen, wobei jede Bohrung eine koaxial zur Bohrungsachse umlaufende Innenfläche aufweist, die ausgebildet ist zum Aufnehmen einer Lagerhülse, welche zum Abrollen von Wälzkörpern ausgebildet ist, wobei der Querschnitt der Bohrung zumindest abschnittweise als Bogenvieleck ausgebildet ist, ist erfindungsgemäß vorgesehen, dass das Bogenvieleck ein Gleichdick ist.

Erfindungsgemäß ist vorgesehen, dass das Bogenvieleck ein Gleichdick ist. Ein Gleichdick ist als geometrische Form dadurch definiert, dass es überall, d.h. in alle Richtungen gemessen, die gleiche Breite hat, die als Abstand zwischen zwei parallelen Geraden gemessen wird, welche den Außenumfang des Gleichdicks (oder den Innenumfang einer Bohrung mit einem entsprechenden Querschnitt) auf gegenüberliegenden Seiten berühren. Ein Gleichdick ermöglicht eine optimierte Anpassung hinsichtlich Steifigkeit und Toleranzausgleich.

Es kann bevorzugt vorgesehen sein, dass das Gleichdick als ein P3G-Profil-Förmiges, trilobulares oder auch als Reuleaux-Dreieck ausgebildet ist. Ein Reuleaux-Dreieck, sowie das Trilobular- oder das P3G-Profil, ist ein regelmäßiges Bogendreieck und stellt ein Gleichdick mit der geringstmöglichen Seitenzahl dar. Dabei zeichnen sich diese Formen dadurch aus, dass sie eine dreieckige Grundform aufweisen, wobei das Zweipunktmass über den Umfang konstant ist. Ein Vorteil dieser Ausführung ist, dass bei einem gegebenen Bohrungsquerschnitt der größtmögliche Durchmesser- oder Radiusunterschied realisierbar ist, verglichen mit höherzahligen Bogenvielecken. Ein weiterer Vorteil der dreizähligen Symmetrie ist, dass eine symmetrische Dreipunktabstützung über den Umfang realisiert wird, die eine räumlich eindeutig definierte Positionierung und Lagerung bietet. Dadurch haben Fertigungstoleranzen einen geringeren Einfluss, was vorteilhaft im Hinblick auf den Fertigungsaufwand ist.

Alternativ ist es denkbar und möglich, dass das Gleichdick ein höherzahliges, bevorzugt ungeradzahliges Bogenvieleck aufweist, beispielsweise ein Bogenfünfeck, -siebeneck oder dergleichen. Dadurch werden bei einem gegebenen Bohrungsquerschnitt geringere Durchmesser- oder Radienunterschiede ermöglicht.

Die parallel angeordneten Gabelarme, die im Folgenden auch kurz als Arme bezeichnet werden, bilden ein Joch. Die Arme weisen die koaxial zueinander verlaufenden Bohrungen auf, welche jeweils ausgebildet sind zum Aufnehmen einer Lagerhülse.

Die Innenfläche wird durch die innere Mantelfläche der Bohrung im Arm der Gelenkgabel, dem Gelenkarm, gebildet. Die Außenfläche wird durch die äußere Mantelfläche der Lagerhülse gebildet. Die Lagerhülse kann gleichbedeutend als Lagerbuchse oder Lageraußenring bezeichnet sein. Die Kreuzebene kann wegen der darin liegenden Zapfenachsen auch als Zapfenebene bezeichnet werden. Die Zapfenachsen sind dabei identisch mit den Bohrungsachsen.

Erfindungsgemäß weist die um die jeweilige Bohrungsachse koaxial umlaufende Innenfläche jeder Bohrung einen von der Kreisform abweichenden, unrunden Öffnungsquerschnitt auf, konkret in Form eines Bogenvielecks. Im Gegensatz dazu haben die im Stand der Technik bekannten Gelenkgabeln zylindrische Bohrungen mit kreisrundem Querschnitt.

Ein Bogenvieleck weist die Grundform eines Vielecks auf, dessen einzelne Seiten bogenförmig konvex radial nach außen gerundet ausgebildet sind. Vorzugsweise kann das Bogenvieleck über seinen gesamten Umfang bogenförmig gerundete Umfangsabschnitte aufweisen, und kann insbesondere auch in den Eckbereichen, in denen die Seiten verbunden sind, keine abgewinkelten Kanten oder Ecken aufweisen. Mit anderen Worten ist die den Umfang bildende Umfangskurve bevorzugt in jedem Punkt stetig differenzierbar.

Das Bogenvieleck kontaktiert die außen auf der Lagerhülse angeordnete Außenfläche in Kontaktabschnitten im Bereich der Seiten des Vielecks, bevorzugt jeweils mittig. In diesem mittigen Bereich ist die Krümmung des Querschnitts am geringsten, so dass eine in Axialrichtung linien- bzw. streifenförmige Kontaktfläche gebildet wird. Die Lagerhülse ist somit nicht wie im Stand der Technik über ihren gesamten kreisrunden Außenumfang mit der Bohrung verbunden, sondern kontaktiert die in der Bohrung ausgebildete Innenfläche nur in den Kontaktabschnitten, die durch in Umfangsrichtung beabstandete Umfangsabschnitte gebildet werden. Vorteilhaft dabei ist, dass eine definierte, verbesserte koaxiale Einspannung des Lagers im Gelenkarm ermöglicht wird.

Zwischen den Kontaktabschnitten kann die Lagerhülse bevorzugt radial elastisch vorgespannt aufgenommen sein. Dabei sorgt die definierte Vorspannung für eine steife Verbindung der Lagerhülse mit dem Gelenkarm, und entsprechend für eine vorteilhaft hohe Lagersteifigkeit. Ein weiterer Vorteil ist, dass die Toleranzvorgaben weniger kritisch sind als bei der kreisrunden Bohrung im Stand der Technik, so dass der Fertigungs- und Montageaufwand reduziert werden kann.

Bevorzugt kann das Bogenvieleck regelmäßig sein. Dabei sind die Kontaktabschnitte rotationssymmetrisch bezüglich der Bohrungsachse angeordnet. Vorteilhaft ist dabei die gleichmäßige, symmetrische Fixierung der Lagerhülse, beispielsweise durch Einpressen in die Bohrung.

Ein Bogenvieleck weist in einer vorteilhaften Ausführungsform über seinen gesamten Umfang ausschließlich bogenförmig gerundete Umfangsabschnitte auf, und hat insbesondere keine abgewinkelten Kanten oder Ecken. Mit anderen Worten ist die den Umfang bildende Umfangskurve in vorteilhafter Ausführung in jedem Punkt stetig differenzierbar. Solche Formen sind beispielsweise als Trilobulare- oder P3G-Profile bekannt. Durch die Wahl einer solchen Form kann die Änderung der Hertz'schen Pressung über den Umfang vergleichmäßigt werden, und Kraftspitzen und sprunghafte Änderungen der lokalen Pressung werden vermieden.

P3G-Profile sind beispielsweise aus der Norm DIN32711-1 und DIN32711-2 bekannt.

Ein Bogenvieleck weist definitionsgemäß einen unrunden, von einer Kreisform abweichenden Querschnitt auf. Mit anderen Worten wird erfindungsgemäß eine von der Kreisform abweichender Bohrungsquerschnitt ausgebildet. Dabei wird die Breite quer zur Achse, d.h. der Symmetrieachse, gemessen, bei der Erfindung entsprechend quer zur Bohrungsachse. Ein Bogenvieleck hat einen sich relativ zu seiner Achse über den Umfang gesehen mehrfach zwischen einem Maximalradius und einem Minimalradius ändernden Radius. Der Minimalradius oder minimale Radius ist dabei gegeben durch den Inkreisradius des Bogenvielecks, welcher dem halben Inkreisdurchmesser, der dem Durchmesser des größtmöglichen in das Bogenvieleck einbeschriebenen Inkreises entspricht, und der Maximalradius oder maximale Radius ist gegeben durch den Umkreisradius, welcher dem halben Umkreisdurchmesser, der dem Durchmesser des kleinstmöglichen, das Bogenvieleck einschließenden Umkreises entspricht. Im Folgenden werden also die Begriffe Minimalradius, minimaler Radius und Inkreisradius sowie die Begriffe Maximalradius, maximaler Radius und Umkreisradius synonym verwendet. Somit ergibt sich die Breite des Bogenvielecks aus dem Umkreisdurchmesser abzüglich der Differenz von Umkreisradius und Inkreisradius.

Die zumindest im Bereich der Innenfläche abschnittweise unrunden, im Querschnitt als Bogenvieleck ausgebildeteten Bohrungen ermöglichen eine optimierte Anpassung der erfindungsgemäßen Gelenkgabel an die in einem Kreuzgelenk wirkenden Belastungen, um eine optimierte Fixierung der Lagerhülse zu realisieren. Dabei ist es möglich, den eingangs beschriebenen Zielkonflikt zwischen einer möglichst spielfreien, steifen Lagerung und einer relativ aufwendig zu fertigenden, eng tolerierten Passung zu lösen. Dies wird dadurch ermöglicht, dass die erfindungsgemäß unrunden Bohrungen eine optimierte Fixierung der Lagerhülse und eine bessere Verteilung der einwirkenden Kräfte ermöglichen.

Die Bohrungen bzw. die darin ausgebildeten oder angeordneten oder aufgenommenen Innenflächen können mittels geeigneter Fertigungsverfahren in die Querschnittsform eines Bogenvielecks gebracht werden. Zur Anpassung an konkrete Anwendungsfälle der Gelenkgabel kann es maßgeblich sein, dass eine definierte Winkelorientierung des Bogenvielecks bezüglich der Bohrungsachse und der Gabelachse erzeugt wird. Dies kann ebenfalls mit einem relativ geringen Fertigungsaufwand erfolgen.

Mit Vorteil kann in dieses Bogenvieleck der oben genannte Inkreis mit einem ersten Radius einschreibbar sein und dieses Bogenvieleck von einem oben genanntem Umkreis mit einem zweiten Radius umschreibbar sein, wobei der Umkreis konzentrisch zum Inkreis angeordnet ist, wobei der Betrag des zweiten Radius grösser ist als der Betrag des ersten Radius.

Weiter kann mit Vorteil die Innenfläche der Bohrungen an mehreren Kontaktabschnitten mit dem Umkreis in Kontakt gelangen und an mehreren Kontaktabschnitten mit dem Inkreis in Kontakt gelangen, wobei die Kontur der Innenfläche stetig differenzierbar zwischen diesen Kontaktpunkten verläuft.

Es ist dabei besonders zu bevorzugen, wenn die Kontaktabschnitte jeweils gleichmäßig über den Umfang verteilt angeordnet sind. So ist es zu bevorzugen, wen die Kontaktabschnitte mit dem Umkreis jeweils um 120° versetzt am Umfang verteilt sind und die Kontaktabschnitte mit dem Inkreis jeweils um 120° versetzt am Umfang verteilt sind.

Bevorzugt hat das Bogenvieleck eine ungeradzahlige Seiten- bzw. Eckenzahl. Der Vorteil dabei ist eine verbesserte, kippfreie Abstützung von quer zur Achse einwirkenden Querkräften.

Es kann bevorzugt vorgesehen sein, dass der Durchmesserunterschied zwischen einem Umkreisdurchmesser und einem Inkreisdurchmesser des Bogenvielecks mindestens 6.5µm beträgt. Dabei kann es vorteilhaft sein, dass der Durchmesserunterschied zwischen einem Umkreisdurchmesser und einem Inkreisdurchmesser des Bogenvielecks zwischen 20µm und 100µm beträgt und bevorzugt zwischen 40µm und 60µm. Die Durchmesserdifferenz beträgt dabei definitionsgemäß das Zweifache der entsprechenden Radiendifferenz zwischen Umkreisradius und Inkreisradius. Dabei erfolgt die Bestimmung des erfindungsgemäßen Durchmesserunterschieds durch eine gemittelte Messung unter Berücksichtigung der Oberflächenrauigkeit und eventueller fertigungstechnisch bedingter Formtoleranzen. Es ist vorteilhaft, dass durch entsprechende Fertigungstechniken, welche plastische und alternativ oder zusätzlich spanende Formgebungsverfahren umfassen können, der erfindungsgemäße Bogenvieleck-Querschnitt reproduzierbar erzeugt werden kann.

Weiterhin hat der Durchmesserunterschied in den angegebenen Wertebereichen den Vorteil, dass dadurch im Betrieb, bei einer Drehung der Zapfen in den Armen, lediglich elastische Verformungen der Laufringe, der Wälzkörper, des Gelenkkreuzes und der Arme in einer geringen Größenordnung von µm (Mikrometern) auftreten, welche im Wesentlichen vollständig reversibel sind und die Funktion und Langzeitstabilität nicht beeinträchtigen.

Die vorgenannten Durchmesserunterschiede können bevorzugt an Gelenkgabeln realisiert werden, die für den Einsatz in Lenkwellen von Kraftfahrzeuglenkungen dimensioniert sind, wobei der der Umkreisdurchmesser und der Inkreisdurchmesser zwischen 5 mm und 40 mm betragen.

Bevorzugt sind Werte des Maximalradius und Minimalradius zwischen 5 mm und 20 mm und besonders bevorzugt zwischen 7,5 mm und 12,5 mm.

Das Verhältnis zwischen den Durchmessern zu den Durchmesserunterschieden kann bevorzugt entsprechend im Bereich von etwa 2000 : 1 bis etwa 50 : 1 liegen.

Eine erfindungsgemäße Ausgestaltung ist in vorteilhafter Weise mit einem vergleichbaren Fertigungsaufwand wie bei konventionellen Bohrungen mit kreisrundem Querschnitt realisierbar. Beispielsweise kann die Gelenkgabel als Umformteil, beispielsweise durch Kaltfliesspressen, Stanzen oder dergleichen, erzeugt werden, bevorzugt aus Stahl.

Es ist möglich, dass jeweils eine erfindungsgemäss ausgebildete Innenfläche einstückig in einer Bohrung ausgebildet ist, an einem in der Bohrung aufgenommenen Lageraußenring, oder an einer Aufnahmebohrung für einen Lageraußenring. Die Innenflächen können unmittelbar an einem durch plastische Umformung erzeugten Umformteil ausgebildet sein, vorzugsweise bereits durch die plastische Umformung, oder alternativ oder zusätzlich durch eine der plastischen Umformung nachfolgende spanende Bearbeitung, beispielsweise durch Schleifen oder dergleichen.

Es kann vorgesehen sein, dass das Bogenvieleck einen parallel zur Gabelachse ausgerichteten Maximalradius aufweist. Alternativ kann das Bogenvieleck einen senkrecht zur Gabelachse ausgerichteten Maximalradius aufweisen. Eine weitere Möglichkeit ist, dass sämtliche Maximalradien des Bogenvielecks die Gabelachse schneiden.

Bei einem Bogenvieleck weist definitionsgemäß einen Maximalradius jeweils von der Achse aus gesehen in die Richtung des maximal über den Inkreis konvex radial nach außen vorstehenden Umfangsabschnitts, und gibt mit anderen Worten die Winkelausrichtung des maximal radial nach außen vorstehenden Scheitelpunkts der Bogenkontur an. Entsprechend hat beispielsweise ein Reuleaux-Dreieck, ein Trilobular oder ein P3G-Profil drei um jeweils 120° versetzte Maximalradien. Entsprechend der vorgenannten Ausführungen ist das Bogenvieleck in einer vorgegebenen Winkelorientierung dadurch definiert bezüglich der Bohrungsachse ausgerichtet, dass jeweils ein bestimmter Maximalradius in einem definierten Winkel α zur Gabelachse steht, wobei einer parallele Ausrichtung α = 0° entspricht, und einer senkrechten Ausrichtung α = 90°. Die übrigen Maximalradien stehen schräg relativ zur Kreuzebene, entsprechend der Winkelteilung des Bogenvielecks. Für 0° < α < 90° stehen sämtliche Maximalradien schräg zur Gabelachse und schneiden diese.

Die definierte Ausrichtung eines bestimmten Maximalradius kann dadurch in Richtung der überwiegenden Kraftkomponente der von außen auf die Lagerung der Zapfen einwirkenden Querkräfte und unter Berücksichtigung der in unbelastetem Zustand vorgegebenen Vorspannkraft bestimmt und vorgegeben werden. Dadurch kann in vorteilhafter Weise mit geringem Aufwand eine optimale Anpassung an die realen Vorgaben im Betrieb erfolgen, die beispielsweise durch den Winkelversatz der an den Lenkwellen angebrachten Gelenkgabeln, die übertragenen Lenkmomente und/oder die radiale Vorspannung der Lagerhülse umfassen können.

Ein Wälzlager eines Kreuzgelenks kann dadurch erzeugt werden, dass zwei Gelenkgabeln, wobei mindestens eine erfindungsgemässe Bohrung ausgebildet ist, mehrere Wälzkörper und ein Gelenkkreuz bereitgestellt werden, wobei der als Bogenvieleck ausgebildete Querschnitt der Innenfläche der Bohrung bevorzugt definiert bezüglich der Bohrungsachse und der Gabelachse orientiert ist. Die Außenlagerringe der Wälzlager, d.h. die Lagerhülsen, werden in die korrespondierenden Bohrungen der Gelenkarme eingesetzt, wobei zur Bildung von Wälzlagern jeweils radial zwischen der Außenfläche des Zapfens und der innen in der Lagerhülse ausgebildeten Lagerfläche die Wälzkörper in Umfangsrichtung abrollbar eingesetzt werden. Die Außenfläche der Zapfen hat dabei bevorzugt einen kreisrunden Querschnitt. Dies kann bevorzugt dadurch realisiert sein, dass die Zapfen einen kreisrunden Querschnitt aufweisen. Dabei ist mit kreisrund die bei der Fertigung angestrebte Form gemeint, Abweichungen im für die Fertigung von Gelenkkreuzzapfen üblichem Maße werden folglich nicht ausgeschlossen. Es ist ebenfalls denkbar und möglich, dass sich durch die Montage bedingt, die Form der Außenfläche der Zapfen einen von der kreisrunden Form abweichenden Querschnitt annimmt. Daraus resultieren die konstruktiven und fertigungstechnischen Vorteile, dass konventionelle Gelenkkreuze weiter eingesetzt werden können, und eine Optimierung durch Kombination mit der erfindungsgemäßen Gelenkgabel erfolgen kann.

Vorzugsweise sind die Wälzkörper, die bevorzugt als Nadeln ausgebildet sind, in einem Nadelkäfig oder mehr bevorzugt in einer Gelenkkreuzbüchse oder Nadelbüchse gehalten. Die Büchse kann dabei auf einer Seite vollständig geschlossen oder etwas geöffnet ausgebildet sein.

Dadurch, dass erfindungsgemäß die Aussenlagerringe der Wälzlager, d.h. die Lagerhülsen, selektiv im Bereich des minimalen Bohrungsdurchmessers radial derart vorgespannt sein können, kann in diesem Bereich in vorteilhafter Weise ein relativ hohes Drehmoment zwischen den Gelenkgabeln und dem Gelenkkreuz auch bei abrupten Lastwechseln spielfrei übertragen werden. Ein daraus resultierender Vorteil ist, dass durch die zusätzlich zur Vorspannung von außen radial einwirkende Kraft die Außenfläche elastisch in Richtung eines ebenfalls dem Bogenvieleck angenäherten Querschnitts verformt werden kann, wodurch sich die Außenfläche in den Umfangsabschnitten im Bereich der Minimalradien radial nach innen oder aussen verformt, so dass dort die auf die Wälzkörper wirkende radiale Spannkraft erhöht wird.

Durch die Ausgestaltung des Bogenvielecks als Bogenvieleck, besonders bevorzugt als Trilobular-, P3G-Profil oder Reuleaux-Dreieck, kann die elastische Vorspannung durch eine über den Umfang gleichmäßig und symmetrisch verteilte elastische Verformung der Bohrung und des Zapfens erfolgen, die praktisch vollkommen reversibel ist, und eine hohe Lenkzeitstabilität und Betriebssicherheit ermöglicht. Ein weiterer Vorteil ist, dass durch die oben erwähnte, definierte Dreipunktlagerung, oder ungeradzahlige Mehrpunktagerung bereits ein relativ geringer Betrag der Vorspannkraft für eine spielfreie Momentübertragung ausreicht, so dass positive Betriebseigenschaften bei einer vorteilhaft geringen Hertz'schen Pressung realisiert werden können.

Bei einem Kreuzgelenk für eine Lenkwelle eines Kraftfahrzeugs, umfassend ein Gelenkkreuz und zwei mit der Lenkwelle verbindbaren Gelenkgabeln, wobei das Gelenkkreuz zwei Paare von Zapfen aufweist, die rechtwinklig zueinander gekreuzt in einer Kreuzebene liegende Zapfenachsen haben, und jeweils eine koaxial zur Zapfenachse umlaufende Außenfläche aufweisen, und die Gelenkgabeln jeweils zwei einander gegenüberliegende Arme mit jeweils einer Bohrung angeordneten Lagerhülse mit einer innen umlaufenden Innenfläche aufweisen, in denen jeweils ein Zapfen um eine Zapfenachse drehbar in einem als Wälzlager ausgebildeten Zapfenlager gelagert ist, wobei zwischen der Außenfläche und der Innenfläche Wälzkörper abrollbar angeordnet sind, ist erfindungsgemäß vorgesehen, dass eine Bohrung der Gelenkgabel gemäß einer oder Kombinationen der oben beschriebenen Ausführungsformen ausgestaltet ist.

Die Bohrungen der beiden Arme einer Gelenkgabel sind bevorzugt als quer zur Längsachse der Lenkwelle durchgehende Augenbohrungen mit unrundem Querschnitt ausgebildet.

Ein erfindungsgemäßes Kreuzgelenk kann unter Berücksichtigung der Einbaulage der Lenkwelle, die übertragenen Lenkmomente und/oder der radialen Vorspannung der Wälzkörper optimiert werden, dass eine spielfreie, sicherheitstechnisch und haptisch optimierte Übertagung des Lenkmoments sichergestellt ist, und Verschleiß durch überhöhte Hertz'sche Pressungen und Lagerreibung langfristig, auch unter hohen Belastungen, vermieden werden kann.

Die Erfindung umfasst weiterhin eine Lenkwelle für eine Kraftfahrzeug-Lenkung, umfassend mindestens ein Kreuzgelenk welches ausgestaltet ist mit einer Gelenkgabel gemäß einer oder Kombinationen der vorangehend beschriebenen Ausführungsformen. Eine Kraftfahrzeug-Lenkung mit mindestens einer derartigen Lenkwelle ist ebenfalls von der Erfindung umfasst.

Die Erfindung kann auch für Gelenkgabeln angewendet werden, die in Gelenken in Form eines Doppelgelenkes oder Doppelkardangelenks angeordnet sind. Bei den erfindungsgemäßen Doppelkardangelenken sind zwei miteinander verbundene Gelenke vorgesehen, die jeweils eine Gelenkgabel umfassen, die gemäß den oben genannten Merkmalen ausgeführt ist.

### Beschreibung der Zeichnungen

Vorteilhafte Ausführungsformen der Erfindung werden im Folgenden anhand der Zeichnungen näher erläutert. Im Einzelnen zeigen:
- Figur 1: ein Kraftfahrzeuglenksystem in einer schematischen perspektivischen Ansicht,
- Figur 2: ein erfindungsgemäßes Kreuzgelenk des Kraftfahrzeuglenksystem gemäß Figur 1 in einer schematischen perspektivischen Ansicht, mit der Ansicht auf die geschlossene Gelenkkreuzbüchse,
- Figur 3: das Kreuzgelenk gemäß Figur 2 in einer weiteren perspektivischen Ansicht, dargestellt ohne Deckel der Gelenkkreuzbüchse,
- Figur 4: eine vergrößerte Detailansicht von Figur 3,
- Figur 5: ein Arm einer erfindungsgemäßen Gelenkgabel in einer ersten Ausführung in einer Ansicht in Richtung einer Zapfenachse,
- Figur 6: ein Arm einer erfindungsgemäßen Gelenkgabel in einer zweiten Ausführung in einer Ansicht wie in Figur 5,
- Figur 7: ein Arm einer erfindungsgemäßen Gelenkgabel in einer dritten Ausführung in einer Ansicht wie in Figur 5,
- Figur 8: einen Querschnitt durch einen erfindungsgemäßen Bogenvieleck-Querschnitt einer Innenfläche eines Gabelarmes gemäß einer der Figuren 5 bis 7,
- Figur 9: ein Doppelkardangelenk, das erfindungsgemäße Gelenkgabeln aufweist,
- Figur 10: Gelenkkreuz mit Wälzkörpern und Gelenkkreuzbüchsen in teilweise auseinander gezogener Darstellung.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

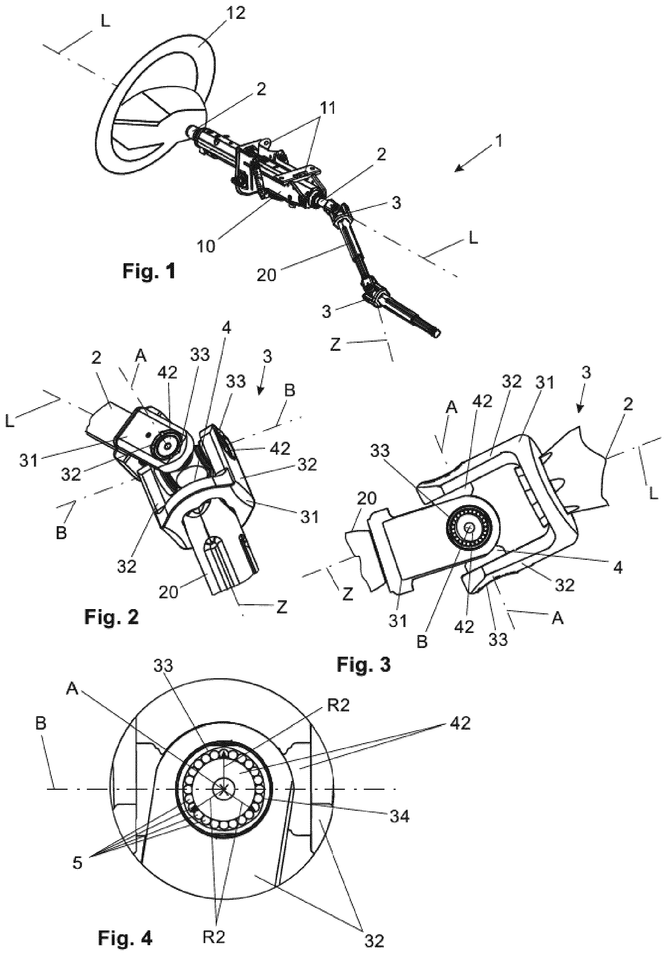

Fig. 1 zeigt ein Kraftfahrzeuglenksystem 1 freigestellt in einer schematischen perspektivischen Darstellung.

Eine Lenkspindel 2 bildet ein erstes Lenkwellenteil, welches eine Lenkwelle im Sinne der Erfindung darstellt. Die Lenkspindel 2 ist um ihre Längsachse L in einer Lenksäule 10 drehbar gelagert, die über eine Trageinheit 11 an einer nicht dargestellten Fahrzeug-Karosserie anbringbar ist.

Am bezüglich der Fahrtrichtung des Kraftfahrzeugs hinteren, fahrerseitigen Ende ist an der Lenkspindel 2 ein Lenkrad 12 angebracht, über das manuelle Lenkbefehle als Drehung der Lenkspindel 2 eingebracht werden können.

Am vorderen Ende ist die Lenkspindel 2 über ein Kreuzgelenk 3 mit einer Zwischenwelle 20 verbunden, welche ein zweites Lenkwellenteil bildet, das ebenfalls eine Lenkwelle im Sinne der Erfindung darstellt. Die Zwischenwelle 20 hat eine Längsachse Z, die gegenüber der Längsachse L der Lenkspindel 2 abgewinkelt ist.

Am vorderen Ende ist die Zwischenwelle 20 über ein weiteres Kreuzgelenk 3, welches im Prinzip baugleich mit dem erstgenannten, bezüglich der Zwischenwelle 20 eingangsseitigen Kreuzgelenk 3 sein kann, mit einer Endwelle 21 verbunden. Die Endwelle 21 kann in an sich bekannter Weise mit einem nicht dargestellten Lenkgetriebe gekuppelt sein.

In der nachfolgenden Erläuterung des Aufbaus des Kreuzgelenks 3 können die Lenkspindel 2, die Zwischenwelle 20 und die Endwelle 21 gleichbedeutend allgemein als Lenkwellenteile 2, 20, 21 oder Lenkwellen bezeichnet sein. Wegen des im Prinzip gleichen Aufbaus erfolgt die Beschreibung anhand des ersten Kreuzgelenks 3 zwischen Lenkspindel 2 und Zwischenwelle 20. Diese kann sinngemäß auf das zweite Kreuzgelenk übertragen werden.

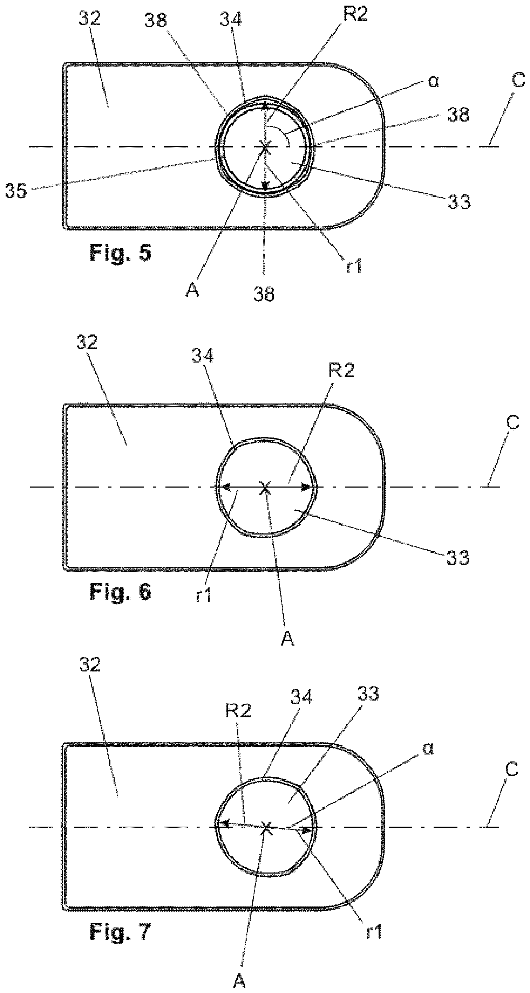

Das Kreuzgelenk 3 umfasst zwei erfindungsgemäß ausgebildete Gelenkgabeln 31, die jeweils an einem Lenkwellenteil 2, 20, 21 angebracht sind und deren Gabelarme 32 in Figuren 5 bis 7 genauer dargestellt werden. Jede Gelenkgabel 31 weist zwei Gabelarme 32, auch kurz als Arme 32 bezeichnet, auf, die sich in Richtung der jeweiligen Längsachse L, Z von dem jeweiligen Lenkwellenteil 2, 20, 21 axial abstehend erstrecken und einander in radialer Richtung symmetrisch gegenüberliegen, so dass sie ein Gelenkjoch bilden. Die Gelenkgabeln 31 weisen erfindungsgemäss als Bogenvieleck ausgebildete Bohrungen 33 auf. In den gezeigten Ausführungen ist das Bogenvieleck beispielhaft als Gleichdick ausgebildet und wird entsprechend als solches bezeichnet. Es ist jedoch auch möglich, anstelle eines Gleichdicks zur Realisierung der Erfindung ein anders geformtes Bogenvieleck einzusetzen.

Das Kreuzgelenk 3 umfasst weiterhin ein Gelenkkreuz 4. Das Gelenkkreuz 4 weist einen Grundkörper 41 auf, von dem zwei Paare von Zapfen 42 derart abstehen, dass sie paarweise koaxial auf Zapfenachsen A, B liegen.

Die Zapfenachsen A, B stehen senkrecht aufeinander und liegen in einer gemeinsamen Kreuzebene, der AB-Ebene.

Der Grundkörper 41 kann bevorzugt als Umformteil ausgebildet sein, an dem die Zapfen 42 einstückig angeformt sind, beispielsweise als kalt umgeformtes Fließpressteil aus Stahl.

Jede Gelenkgabel 31 weist an ihren Gabelarmen 32 eine erfindungsgemäß ausgestaltete Bohrung 33 mit jeweils einer innen umlaufenden Innenfläche 34 auf. Die Innenfläche 34 bildet die innere Mantelfläche der Bohrung 33 und weist erfindungsgemäß einen als Bogenvieleck ausgebildeten Öffnungsquerschnitt auf, beispielsweise auch als Gleichdick. Die Innenfläche 34 kann, wie im Beispiel dargestellt, einstückig mit der Bohrung 33 ausgebildet sein, und durch plastische Formgebung wie Stanzen, Pressen oder dergleichen, und gegebenenfalls durch zusätzliche spanende Bearbeitung wie Schleifen oder dergleichen gefertigt sein.

Die Innenfläche 34 ist jeweils rotationsymmetrisch zu einer der Zapfenachsen A, B ausgebildet, welche entsprechend identisch sind mit den Bohrungsachsen.

Die Wälzkörper 5 sind in der Gelenkkreuzbüchse 51 gehalten, die durch einen Deckel 52 abgeschlossen ist. Bevorzugt werden dabei die Wälzkörper 5 ausschließlich durch ein Schmierfett, das in der Gelenkkreuzbüchse 51 eingebracht ist, gehalten. Zur Montage wird die Gelenckreuzbüchse 51 mit den eingelegten Wälzkörpern 5 wird auf das distale Ende des jeweiligen Zapfens 42 aufgeschoben.

Wie in Figuren 2 und 3 erkennbar, sind jeweils zwei Zapfen 42 eines Paars in Bohrungen 33 der Arme 32 wälzgelagert. Die Bohrungen 33 verlaufen radial, quer zur jeweiligen Längsachse L, Z als durchgehende Augenbohrungen durch das jeweilige Paar von Armen 32 hindurch. Die Bohrungen 33 haben erfindungsgemäß einen als Bogenvieleck geformten Öffnungsquerschnitt.

Jede Bohrung 33 weist eine innen umlaufende Innenfläche 34 auf, wie in der vergrößerten Darstellung von Figur 4. In diese kann - wie im Beispiel gezeigt - jeweils ein Lageraußenring in Form einer Lagerhülse 35 eingepresst sein.

Die Lagerhülse 35 hat in unbelastetem Zustand einen kreisrunden Querschnitt.

Zwischen der Außenfläche 43 eines Zapfens 42 und der Innenfläche 34 einer Lagerhülse 35 sind Wälzkörper 5 abrollbar angeordnet zur Bildung eines Wälzlagers, beispielsweise bevorzugt zylindrische Nadelrollen.

Die in Figur 4 dargestellte Anordnung für die Zapfenachse A gilt analog für die in dem andern Gelenkjoch gelagerten Zapfen 42 der Zapfenachse B. Jedes der Kreuzgelenke 3 kann bevorzugt gleichartig aufgebaut sein.

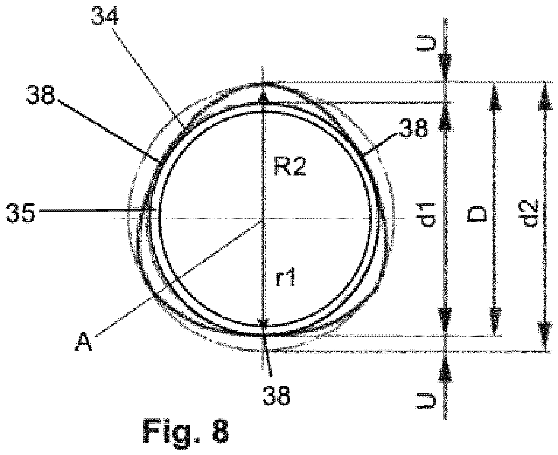

Figur 8 zeigt allgemein einen Querschnitt durch eine erfindungsgemäß ausgebildete Bohrung 33 eines Gabelarmes 32, der auf seinem inneren Umfang eine Innenfläche 34 aufweist, und ein als Bogenvieleck, konkret als Reuleaux-Dreieck ausgebildetes Gleichdick aufweist. Dieses weist konzentrisch zur Bohrungsachse A einen Inkreis mit einem Inkreisdurchmesser d1 auf, und einem Umkreis mit einem Umkreisdurchmesser d2. Die Breite B entspricht der Summe des Umkreisradius R2 = d2/2 (=halber Umkreisdurchmesser d2) und des Inkreisradius r1 = d1/2. Der Umkreisradius R2 entspricht definitionsgemäß dem Maximalradius in dem Umfangsabschnitt, der maximal über den Inkreis konvex radial nach außen vorsteht. Durch die symmetrisch dreizählige Form sind drei Maximalradien gleichmäßig im Winkelabstand von 120° über den Umfang verteilt angeordnet, wobei der Maximalradius R2 in den Figuren jeweils nur einmal eingezeichnet ist, um die Orientierung des Gleichdicks zur Zapfenachse A anzugeben.

Zwischen dem Inkreisradius r1 und dem Umkreisradius R2 beträgt die Radiendifferenz U = R2 - r1, und die Durchmesserdifferenz entsprechend 2U = 2(R2 - r1).

In den Figuren sind die unrunde Form des Gleichdicks und entsprechend die Durchmesserdifferenzen 2U nicht massstabsgerecht und nur zur Verdeutlichung des Prinzips stark übertrieben dargestellt.

Bevorzugt ist die Durchmesserdiferenz 2U > 6.5µm, je nach einem Inkreisdurchmesser d1 oder Umkreisdurchmesser d2 zwischen etwa 5 mm und 20 mm kann die Durchmesserdifferenz 2U größenordnungsmäßig zwischen 20µm und 100µm beträgt und bevorzugt zwischen 40µm und 60µm betragen.

Der Durchmesser der Lagerhülse 35 in unbelastetem Zustand ist bevorzugt an den Inkreisdurchmesser d1 angepasst, dass die Lagerhülse 35 mit definierter Passung in die Bohrung 33 eingepresst werden kann, wobei in Umfangsrichtung separierte Kontaktbereiche, dies sind die Figuren 5 und 8 eingezeichneten Kontaktflächen 38, jeweils mittig auf den Seiten des Bogenvielecks erzeugt werden, und zwar in den Umfangsbereichen, in denen der Öffnungsquerschnitt den Inkreisradius r1 aufweist. Zwischen den Kontaktflächen 38 kann die Lagerhülse 35 elastisch koaxial in der Bohrung 33 eingespannt sein.

In Figur 4 ist erkennbar, dass die Bohrung 33 im Bereich der Innenfläche unrund ausgebildet ist, und zwar in Form eines Reuleaux-Dreiecks, wie vorangehend prinzipiell zu Figur 8 erläutert. Zur Verdeutlichung sind in Figur 4 alle drei Maximalradien R2 angedeutet und bezeichnet.

Im Umfangsbereich der Maximalradien R2 steht die Innenfläche 33 wie in Figur 8 gezeigt radial konvex nach innen über den Inkreis des Gleichdicks vor.

Entsprechend haben die Wälzkörper 5 im Umfangsbereich eines jeden Maximalradius R2 ein höheres radiales Spiel (Radialspiel) zwischen der Außenfläche 43 und der Innenfläche 34, also zwischen dem Außenumfang des Zapfens 42 und dem Innenumfang der Bohrung 33.

Die Abmessungen der Außenfläche 43, der Innenfläche 34 und der Wälzkörper 5 können bevorzugt auch so gewählt werden, dass die Wälzkörper 5 im Umfangsbereich jedes Minimalradius r1 zwischen dem Zapfen 42 und der Bohrung 33 in radialer Richtung elastisch vorgespannt sind. Dabei kann vorgesehen sein, dass die Wälzkörper 5 im Umfangsbereich der Maximalradien R2 weniger stark vorgespannt sind, oder dort im wesentlichen keine Vorspannung erfolgt und Radialspiel vorliegt, und folglich die lokale elastische Vorspannkraft gleich null ist.

In den Figuren 5, 6 und 7 sind verschiedene erfindungsgemäße Ausführungsformen eines Gelenkarmes 32 gezeigt, und zwar jeweils in Richtung der Bohrungsachse A, welche mit einer Ansicht in Richtung der gekreuzten Bohrungsachse B identisch ist.

Die Ausführungen unterscheiden sich in dem Betrag des Winkels α (alpha), der zwischen dem in Figur 8 hervorgehobenen (in der Zeichnung senkrecht nach oben gerichteten), bestimmten Maximalradius R2 und der Gabelachse C eingeschlossen wird, und entsprechend die Ausrichtung des Gleichdicks angibt.

In der ersten Ausführungsform gemäß Figur 5 beträgt α = 90°, der zur Ausrichtung bestimmte Maximalradius R2 steht senkrecht zur Gabelachse C.

In der zweiten Ausführungsform gemäß Figur 6 beträgt α = 0° (null), der zur Ausrichtung bestimmte Maximalradius R2 liegt parallel in der Gabelachse C.

In der dritten Ausführungsform gemäß Figur 7 gilt 0° < α < 90°, so dass der zur Ausrichtung bestimmte und auch die übrigen Maximalradien R2 zur Gabelachse C schräg geneigt sind.

Die Ausrichtung des Gleichdicks kann bevorzugt vorgegeben werden, dass unter Berücksichtigung der Richtung der überwiegenden Kraftkomponente der von außen auf die Lagerung der Zapfen einwirkenden Querkräfte und der in unbelastetem Zustand vorgegebenen Vorspannkraft ausgerichtet ist. Dadurch kann in vorteilhafter Weise mit geringem Aufwand eine optimale Anpassung an die realen Vorgaben im Betrieb erfolgen, die beispielsweise den Winkelversatz der Lenkwellenteile 2, 20, 21, die übertragenen Lenkmomente und/oder die radiale Vorspannung der Wälzkörper 5 umfassen können.

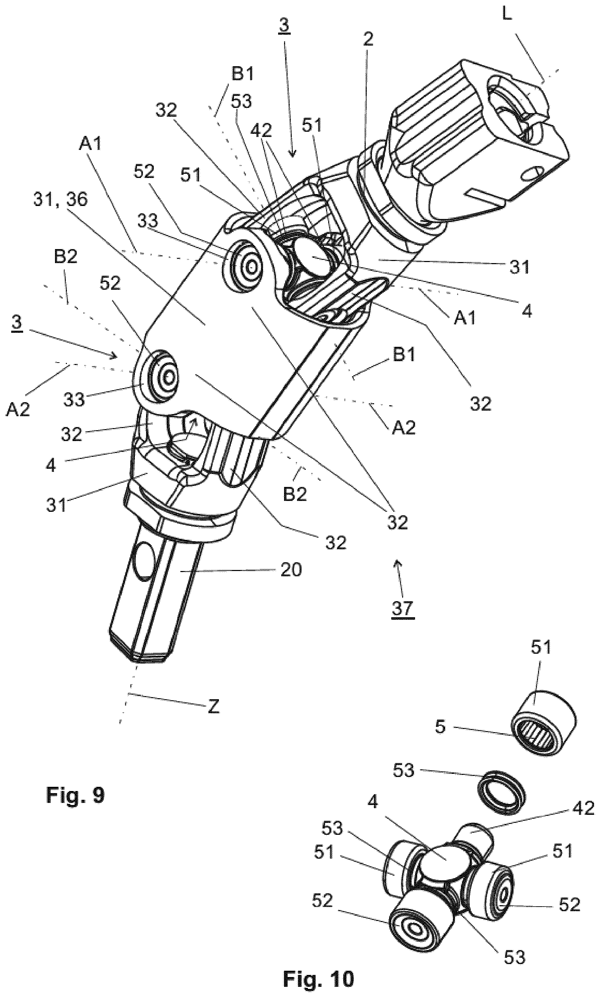

In der Figur 9 ist ein Doppelkardangelenk 37 dargestellt, das zwei Kreuzgelenke 3 aufweist, die über ein Verbindungselement 36 miteinander gekoppelt sind. Die beiden Kreuzgelenke 3 umfassen, wie oben bereits ausgeführt Gelenkgabeln 31, die Arme 32 aufweisen, wobei das Verbindungselement 36 jeweils zwei Arme 32 für jeweils eines der beiden Kreuzgelenke 3 bereitstellt. Die beiden Gelenkgabeln 31, der Kreuzgelenke 3 und/oder die Kreuzgelenke 3 insgesamt sind entsprechend der oben beschriebenen Erfindung ausgeführt, wobei alle Ausführungsformen eingesetzt werden können. Jededer Gelenkgabeln 31 hat Bohrungsachsen A1 und B1 bzw. A2 und B2, die jeweils rechtwinklig zueinander ausgerichtet sind. Dabei ist die Bohrungsachse A1 der einen Gelenkgabel 4 relativ zur Bohrungsachse A2 der anderen Gelenkgabel 4 parallel zueinander ausgerichtet. Es ist jedoch auch denkbar und möglich, die beiden Bohrungsachsen A1 und A2 nicht parallel zueinander auszurichten. Das wird durch die Bohrungen 33 in den Gabelarmen 32, die am Verbindungselement 36 angeordnet sind, erreicht. Auch durch dieses Doppelgelenk oder Doppelkardangelenk 37 wird eine erste Welle, im Beispiel die Lenkspindel 2 mit der Längsachse L, mit einer zweiten Welle, im Beispiel die Zwischenwelle 20 mit der Längsachse Z, drehbar gekoppelt.

### Bezugszeichenliste

- 1: Kraftfahrzeuglenksystem
- 10: Lenksäule
- 11: Trageinheit
- 2: Lenkspindel
- 20: Zwischenwelle
- 21: Endwelle
- 3: Kreuzgelenk
- 31: Gelenkgabel
- 32: Gelenkarm (Arm)
- 33: Bohrung (Bohrung)
- 34: Innenfläche
- 35: Lagerhülse (Lagerbuchse, Lageraußenring)
- 36: Verbindungselement
- 37: Doppelkardangelenk
- 38: Kontaktfläche
- 4: Gelenkkreuz
- 41: Grundkörper
- 42: Zapfen
- 43: Außenfläche
- 5: Wälzkörper (Nadelrollen)
- 51: Gelenkkreuzbüchse
- 52: Deckel der Gelenkkreuzbüchse
- 53: Dichtung der Gelenkkreuzbüchse
- L: Längsachse (der Lenkspindel 2)
- Z: Längsachse (der Zwischenwelle 20)
- A, B, A1, A2, B1, B2: Zapfenachsen
- AB: Kreuzebene
- d1: Inkreisdurchmesser
- r1: Inkreisradius
- d2: Umkreisdurchmesser
- R2: Umkreisradius
- D: Breite des Gleichdicks
- U: Radiendifferenz
- α: Winkel

## Patentansprüche

1. Gelenkgabel (31) für ein Kreuzgelenk (3), umfassend zwei Gabelarme (32), die parallel zueinander ausgerichtet sind und zwei auf derselben Bohrungsachse (A) angeordnete Bohrungen (33) aufweisen, wobei jede Bohrung (33) eine koaxial zur Bohrungsachse (A) umlaufende Innenfläche (34) aufweist, die ausgebildet ist zum Aufnehmen einer Lagerhülse (35), welche zum Abrollen von Wälzkörpern ausgebildet ist,
wobei der Querschnitt der Bohrung (33) zumindest abschnittweise als Bogenvieleck ausgebildet ist,
**dadurch gekennzeichnet,**
**dass** das Bogenvieleck ein Gleichdick ist.

2. Gelenkgabel nach Anspruch 1, **dadurch gekennzeichnet, dass** das Bogenvieleck regelmässig ist.

3. Gelenkgabel nach einem der vorangehenden Ansprüche, **dadurch gekennzeichnet, dass** in das Bogenvieleck ein Inkreis mit einem ersten Radius (r1) einschreibbar ist und das Bogenvieleck mit einem Umkreis mit einem zweiten Radius (R2) umschreibbar ist, wobei der Umkreis konzentrisch zum Inkreis angeordnet ist, wobei der Betrag des zweiten Radius (R2) grösser ist als der Betrag des ersten Radius (r1).

4. Gelenkgabel nach einem der vorangehenden Ansprüche, **dadurch gekennzeichnet, dass** die Innenfläche (34) der Bohrung (33) an mehreren Kontaktabschnitten mit dem Umkreis in Kontakt gelangt und an mehreren Kontaktabschnitten mit dem Inkreis in Kontakt gelangt, wobei die Kontur der Innenfläche (34) stetig differenzierbar zwischen diesen Kontaktpunkten verläuft.

5. Gelenkgabel nach einem der vorangehenden Ansprüche, **dadurch gekennzeichnet, dass** das Gleichdick als Trilobular-, Reuleaux-Dreieck oder P3G-Profil ausgebildet ist.

6. Gelenkgabel nach einem der vorangehenden Ansprüche, **dadurch gekennzeichnet, dass** der Durchmesserunterschied zwischen einem Umkreisdurchmesser (d2) und einem Inkreisdurchmesser (d1) des Bogenvielecks mindestens 6.5µm beträgt.

7. Gelenkgabel nach einem der vorangehenden Ansprüche, **dadurch gekennzeichnet, dass** der Durchmesserunterschied zwischen einem Umkreisdurchmesser (d2) und einem Inkreisdurchmesser (d1) des Bogenvielecks zwischen 20µm und 100µm beträgt und bevorzugt zwischen 40µm und 60µm beträgt.

8. Gelenkgabel nach einem der vorangehenden Ansprüche, **dadurch gekennzeichnet, dass** der Inkreisdurchmesser (d2) und der Umkreisdurchmesser (d1) zwischen 5 mm und 40 mm betragen.

9. Gelenkgabel nach einem der vorangehenden Ansprüche, **dadurch gekennzeichnet, dass** das Bogenvieleck einen parallel oder senkrecht zur Gabelachse (C) ausgerichteten Maximalradius (R2) aufweist.

10. Gelenkgabel nach einem der vorangehenden Ansprüche 1 bis 9, **dadurch gekennzeichnet, dass** sämtliche Maximalradien (R2) des Gleichdicks die Gabelachse (C) schneiden.

11. Gelenkgabel nach einem der vorangehenden Ansprüche, **dadurch gekennzeichnet, dass** jeweils eine Innenfläche(34) einstückig an einer Bohrung (33) ausgebildet ist, oder an einer in der Bohrung (33) angebrachten Lagerhülse (35).

12. Kreuzgelenk (3) für eine Lenkwelle (2, 20, 21) eines Kraftfahrzeugs, umfassend ein Gelenkkreuz (4) und zwei mit der Lenkwelle (2, 20, 21) verbindbaren Gelenkgabeln (31), wobei das Gelenkkreuz (4) zwei Paare von Zapfen (42) aufweist, die rechtwinklig zueinander gekreuzt in einer Kreuzebene (AB) liegende Zapfenachsen (A, B) haben, und jeweils eine koaxial zur Zapfenachse (42) umlaufende Innenlaufbahn (43) aufweisen, und die Gelenkgabeln (31) jeweils zwei einander gegenüberliegende Arme (32) mit jeweils in einer Bohrung (33) angeordneten Lagerhülse (35) mit einer innen umlaufenden Außenlaufbahn (34) aufweisen, in denen jeweils ein Zapfen (42) um eine Zapfenachse (A, B) drehbar in einem als Wälzlager ausgebildeten Zapfenlager gelagert ist, wobei zwischen der Innenlaufbahn (43) und der Außenlaufbahn (34) Wälzkörper (5) abrollbar angeordnet sind,
**dadurch gekennzeichnet,**
**dass** die Gelenkgabel (3) ausgestaltet ist nach einem der vorangehenden Ansprüche.

13. Kreuzgelenk nach Anspruch 12, **dadurch gekennzeichnet, dass** zwischen Innenlaufbahn (43) und Außenlaufbahn (34) in Richtung eines Maximalradius (R2) des Bogenvielecks gemessen eine niedrigere Vorspannung anliegt, als in Richtung eines Minimalradius (r1) des Bogenvielecks gemessen.

14. Kreuzgelenk nach einem der Ansprüche 12 bis 13, **dadurch gekennzeichnet, dass** die Innenlaufbahn (43) einen kreisrunden Querschnitt aufweist.

15. Lenkwelle für eine Kraftfahrzeug-Lenkung, umfassend mindestens ein Kreuzgelenk (3), welches ausgestaltet ist gemäß einem der Ansprüche 12 bis 14.

## Claims

1. Joint fork (31) for a universal joint (3), comprising two fork arms (32) which are aligned parallel to one another and have two bores (33) arranged on the same bore axis (A), each bore (33) having an inner surface (34) which runs coaxially around the bore axis (A) and is designed to receive a bearing sleeve (35) which is designed for rolling bodies, wherein the cross-section of the bore (33) is formed at least in sections as an arcuate polygon,
**characterized in**
**that** the arc polygon is an orbiform curve.

2. Joint fork according to claim 1, **characterized in that** the arc polygon is regular.

3. Joint fork according to one of the preceding claims, **characterized in that** an inscribed circle with a first radius (r1) can be inscribed in the arc polygon and the arc polygon can be circumscribed by a circumcircle with a second radius (R2), the circumcircle being arranged concentrically to the inscribed circle, the magnitude of the second radius (R2) being greater than the magnitude of the first radius (r1).

4. Joint fork according to one of the preceding claims, **characterized in that** the inner surface (34) of the bore (33) comes into contact with the circumcircle at a plurality of contact sections and comes into contact with the incircle at a plurality of contact sections, the contour of the inner surface (34) extending in a continuously differentiable manner between these contact points.

5. Joint fork according to one of the preceding claims, **characterized in that** the orbiform curve is designed as a trilobular, Reuleaux triangle or P3G profile.

6. Joint fork according to one of the preceding claims, **characterized in that** the difference in diameter between a circumferential diameter (d2) and an incircular diameter (d1) of the arc polygon is at least 6.5µm.

7. Joint fork according to one of the preceding claims, **characterized in that** the difference in diameter between a circumferential diameter (d2) and an incircular diameter (d1) of the arc polygon is between 20µm and 100µm and is preferably between 40µm and 60µm.

8. Joint fork according to one of the preceding claims, **characterized in that** the inner circle diameter (d2) and the outer circle diameter (d1) are between 5 mm and 40 mm.

9. Joint fork according to one of the preceding claims, **characterized in that** the arc polygon has a maximum radius (R2) aligned parallel or perpendicular to the fork axis (C).

10. Joint fork according to one of the preceding claims 1 to 9, **characterized in that** all maximum radii (R2) of the orbiform curve intersect the fork axis (C).

11. Joint fork according to one of the preceding claims, **characterized in that** in each case an inner surface (34) is formed integrally on a bore (33), or on a bearing sleeve (35) fitted in the bore (33).

12. Universal joint (3) for a steering shaft (2, 20, 21) of a motor vehicle, comprising a joint cross (4) and two joint forks (31) which can be connected to the steering shaft (2, 20, 21), the joint cross (4) having two pairs of journals (42) which have journal axes (A, B) lying crossed at right angles to one another in a cross plane (AB) and each have an inner raceway (43) running coaxially around the journal axis (42), and the joint forks (31) each have two mutually opposite arms (32), each having a bearing sleeve (35) arranged in a bore (33) and having an outer raceway (34) running around the inside, in each of which arms a journal (42) is mounted rotatably about a journal axis (A, B) in a journal bearing designed as a rolling bearing, rolling elements (5) being arranged in a rolling manner between the inner raceway (43) and the outer raceway (34),
**characterized in**
**in that** the joint fork (3) is designed according to one of the preceding claims.

13. Universal joint according to claim 12, **characterized in that** a lower preload is applied between the inner raceway (43) and the outer raceway (34) measured in the direction of a maximum radius (R2) of the arc polygon than measured in the direction of a minimum radius (r1) of the arc polygon.

14. Universal joint according to one of claims 12 to 13, **characterized in that** the inner raceway (43) has a circular cross-section.

15. Steering shaft for a motor vehicle steering system, comprising at least one universal joint (3), which is designed according to one of claims 12 to 14.

## Revendications

1. Fourche articulée (31) pour un joint universel (3), comprenant deux bras de fourche (32) qui sont orientés parallèlement l'un à l'autre et présentent deux alésages (33) disposés sur le même axe d'alésage (A), chaque alésage (33) présentant une surface intérieure (34) périphérique coaxiale à l'axe d'alésage (A), qui est conçue pour recevoir un manchon de palier (35) qui est conçu pour faire rouler des corps roulants,
la section transversale de l'alésage (33) étant conçue, au moins par sections, comme un polygone arqué,
**caractérisé en ce que**
que le polygone arqué est une courbe de largeur constante.

2. Fourche articulée selon la revendication 1, **caractérisée en ce que** le polygone de courbure est régulier.

3. Fourche articulée selon l'une des revendications précédentes, **caractérisée en ce qu'**un cercle inscrit avec un premier rayon (r1) peut être inscrit dans le polygone d'arc et **en ce que** le polygone d'arc peut être circonscrit par un cercle circonscrit avec un deuxième rayon (R2), le cercle circonscrit étant disposé de manière concentrique par rapport au cercle inscrit, la valeur absolue du deuxième rayon (R2) étant supérieure à la valeur absolue du premier rayon (r1).

4. Fourche articulée selon l'une quelconque des revendications précédentes, **caractérisée en ce que** la surface interne (34) de l'alésage (33) vient en contact avec le cercle circonscrit en une pluralité de parties de contact et vient en contact avec le cercle inscrit en une pluralité de parties de contact, le contour de la surface interne (34) s'étendant de manière continue et différentiable entre ces points de contact.

5. Fourche articulée selon l'une des revendications précédentes, **caractérisée en ce que** la courbe de largeur constante est un profil trilobé, un triangle de Reuleaux ou un profil P3G.

6. Fourche articulée selon l'une quelconque des revendications précédentes, **caractérisée en ce que** la différence de diamètre entre un diamètre de circonférence (d2) et un diamètre de cercle inscrit (d1) du polygone d'arc est d'au moins 6,5µm.

7. Fourche articulée selon l'une quelconque des revendications précédentes, **caractérisée en ce que** la différence de diamètre entre un diamètre circonférentiel (d2) et un diamètre inscrit (d1) du polygone d'arc est comprise entre 20µm et 100µm et est de préférence comprise entre 40µm et 60µm.

8. Fourche articulée selon l'une quelconque des revendications précédentes, **caractérisée en ce que** le diamètre du cercle inscrit (d2) et le diamètre du cercle circonscrit (d1) sont compris entre 5 mm et 40 mm.

9. Fourche articulée selon l'une des revendications précédentes, **caractérisée en ce que** le polygone arqué présente un rayon maximal (R2) orienté parallèlement ou perpendiculairement à l'axe de la fourche (C).

10. Fourche articulée selon l'une des revendications précédentes 1 à 9, **caractérisée en ce que** tous les rayons maximaux (R2) de la courbe de largeur constante coupent l'axe (C) de la fourche.

11. Fourche articulée selon l'une des revendications précédentes, **caractérisée en ce que** chaque fois une surface intérieure (34) est formée d'une seule pièce sur un alésage (33), ou sur une douille de palier (35) montée dans l'alésage (33).

12. Joint universel (3) pour un arbre de direction (2, 20, 21) d'un véhicule automobile, comprenant une croix d'articulation (4) et deux fourches d'articulation (31) pouvant être reliées à l'arbre de direction (2, 20, 21), la croix d'articulation (4) présentant deux paires de tourillons (42) qui ont des axes de tourillon (A, B) perpendiculaires l'un à l'autre et croisés dans un plan de croix (AB), et qui présentent chacun une piste de roulement intérieure (43) tournant coaxialement à l'axe de tourillon (42), et les fourches articulées (31) présentent respectivement deux bras (32) opposés l'un à l'autre avec respectivement un manchon de palier (35) disposé dans un alésage (33) avec une piste de roulement extérieure (34) périphérique intérieure, dans lesquels respectivement un tourillon (42) est logé de manière rotative autour d'un axe de tourillon (A, B) dans un palier de tourillon conçu comme un palier à roulement, des corps de roulement (5) étant disposés de manière à pouvoir rouler entre la piste de roulement intérieure (43) et la piste de roulement extérieure (34),
**caractérisé en ce que**
que la fourche articulée (3) est conçue selon l'une des revendications précédentes.

13. Joint universel selon la revendication 12, **caractérisé en ce qu'**une précontrainte plus faible est appliquée entre la piste de roulement intérieure (43) et la piste de roulement extérieure (34), mesurée dans la direction d'un rayon maximal (R2) du polygone d'arc, que mesurée dans la direction d'un rayon minimal (r1) du polygone d'arc.

14. Joint universel selon l'une des revendications 12 à 13, **caractérisé en ce que** la piste de roulement intérieure (43) présente une section transversale circulaire.

15. Arbre de direction pour direction de véhicule automobile, comprenant au moins un joint universel (3) configuré selon l'une quelconque des revendications 12 à 14.
